# FASCICULE DE BREVET EUROPEEN

(11) **EP 0 816 202 B1**
(45) Date de publication et mention de la délivrance du brevet: **02.05.2003**
(21) Numéro de dépôt: 97440057.4
(22) Date de dépôt: 04.07.1997
(51) Int. Cl.: B62B 1/22

(54) **Dispositif de porte-outil destiné à être adapté sur une brouette**
Anordnung eines Werkzeugträgers auf einer Schubkarre
Tool support mounted on a wheel barrow

(30) Priorité: 05.07.1996 FR 9608572
(43) Date de publication de la demande: 07.01.1998
(73) Titulaire: ROLL'ERG France SàRL, 76480 MESNIL S/JUMIGES (FR)
(72) Inventeur: Gares, Jean-Michel, 44000 Nantes (FR)

(56) Documents cités:
- EP-A- 0 180 884
- AU-A- 630 325
- US-A- 2 570 504
- US-A- 4 923 202

## Description

La présente invention a pour objet un dispositif de porte-outil destiné à être adapté sur une brouette.

Une brouette est généralement utilisée pour transporter des matériaux en vrac, ce qui nécessite également l'utilisation d'outils, tels qu'une pelle, un râteau etc...

Or, il n'est pas toujours aisé de se déplacer, sur une certaine distance, avec à la fois une brouette et un ou plusieurs outils. En effet, la partie utile, plus lourde, de l'outil est posée dans la caisse de la brouette, tandis que le manche repose sur le bord de celle-ci, mais les mouvements de balancement et les tressautements de la brouette, surtout lorsque le terrain est inégal, peuvent entraîner la chute desdits outils.

La présente invention a pour but de remédier à cet inconvénient en proposant un dispositif porte-outil adaptable sur une brouette, permettant de déplacer une brouette et au moins un outil sans risque de chute de celui-ci.

Le dispositif objet de la présente invention se caractérise essentiellement en ce qu'il comprend au moins deux supports identiques, solidarisables sur le côté de la caisse d'une brouette, chacun desdits supports comporte au moins une cavité rétentrice en forme de U, de dimensions internes supérieures aux dimensions transversales du manche de l'outil à maintenir, et dont l'ouverture est d'une largeur inférieure au diamètre dudit manche, en sorte que l'introduction dudit manche dans ladite cavité est réalisée en force par déformation d'une partie du support au niveau de ladite ouverture, le fond de ladite cavité comportant un moyen élastique de répulsion dudit manche vers ladite ouverture.

Selon un premier mode de réalisation du dispositif selon l'invention, les supports sont réalisés en une matière plastique semi-rigide.

Selon un second mode de réalisation du dispositif selon l'invention, les supports sont réalisés en fil métallique plié.

Selon une caractéristique additionnelle du dispositif selon l'invention chaque support comporte plusieurs cavités, chacune pouvant être de dimensions internes différentes.

Conformément à l'invention, un support est solidarisable à la caisse de la brouette soit par magnétisme, soit par encliquetage sur le bord de ladite caisse.

Les supports sont solidarisés sur un côté de la brouette par des moyens appropriés, soit par encliquetage sur des embases fixées à demeure sur ladite brouette, soit au moyen de pinces, soit par magnétisme lorsque lesdits supports sont en matière plastique.

Le moyen élastique de répulsion consiste, soit en une lame de métal solidarisée au support dans le fond de la cavité, disposée transversalement et de manière inclinée, soit en une partie plate, inclinée, faite de la même matière que celle dont est fait ledit support et venant de fabrication de celui-ci.

Les avantages et les caractéristiques de la présente invention ressortiront plus clairement de la description qui suit et qui se rapporte au dessin annexé, lequel en représente plusieurs modes de réalisation non limitatifs.
- la figure 1 représente une vue en perspective d'une brouette équipée d'un dispositif porte-outil selon l'invention.
- la figure 2 représente une vue en élévation du même dispositif.
- la figure 3 représente une vue en perspective d'un deuxième mode de réalisation du dispositif selon l'invention.
- la figure 4 représente une vue en coupe longitudinale d'un troisième mode de réalisation du dispositif selon l'invention.
- la figure 5 représente une vue en coupe transversale selon l'axe XX' de la figure 4.
- la figure 6 représente une vue en berspective d'une variante du même dispositif.

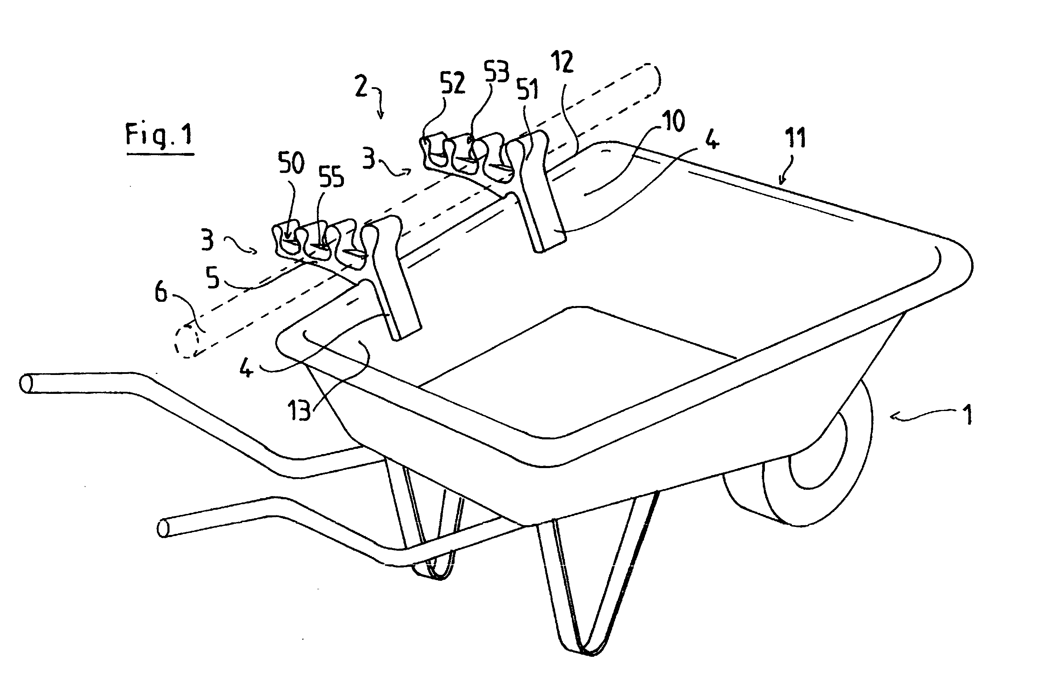

Si on se réfère à la figure 1 on peut voir une brouette 1 sur un côté 10 de la caisse 11 de laquelle est solidarisé un dispositif de porte-outil 2 selon l'invention, lequel comporte deux supports 3 identiques, qui comportent chacun une partie inférieure 4 destinée à la solidarisation à la caisse 1, et une partie supérieure 5 débordant latéralement la caisse 11, destinée au maintien d'outils.

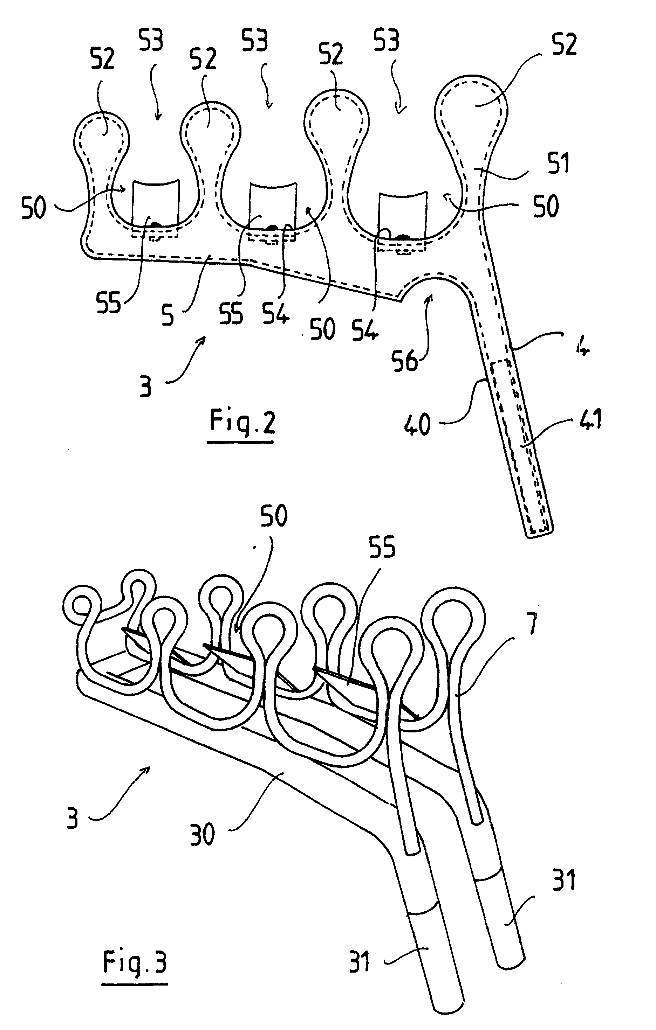

Si on se réfère également à la figure 2 on peut voir que dans la partie supérieure 5 d'un support 3, lequel est réalisé par thermoformage d'une matière plastique, sont pratiquées trois cavités 50 en forme de U, créées par quatre saillies verticales 51 dont les extrémités comportent chacune un renflement 52 réduisant l'ouverture 53 des cavités 50.

Les cavités 50 sont destinées à recevoir chacune le manche 6 d'un outil, représenté en traits discontinus sur la figure 1, introduit en force en écartant les extrémités des saillies verticales 51, le manche 6 reposant sur les deux supports 3.

Le fond 54 de chacune des cavités 50 comporte un élément élastique 55 de répulsion du manche 6 vers les renflements 52 afin de bloquer ce dernier, en l'occurrence les moyens élastiques sont des lames de métal solidarisées au support 3 par rivetage, et disposées transversalement et de manière inclinée.

La partie inférieure 4 de chaque support 3 comporte une face plane 40 se prolongeant par un creux 56 pratiqué dans la partie supérieure 5 et destiné à venir s'ajuster sur le bord 12 d'un côté 10 de la caisse 11 de la brouette 1, tandis que la face plane 40 est appliquée contre la paroi interne 13 du côté 10, la solidarisation du support 3 à ce dernier étant réalisée au moyen d'un élément magnétique 41 que renferme la partie inférieure 4.

En pratique, le manche 6 de l'outil à maintenir est posé sur les deux supports 3 en regard de deux cavités 50 et y est encliqueté en force, l'élément élastique 55 plaquant le manche 6 contre les renflements 52.

Il est à noter que les petits outils, du type truelle, peuvent être solidarisés à un seul support 3.

Les cavités 50 sont de dimensions différentes afin de permettre le maintien de tous les outils existants.

Si on se réfère maintenant à la figure 3 on peut voir que selon un deuxième mode de réalisation, les cavités 50 sont créées par pliage d'un fil métallique 7 soudé sur un tube 30 plié dont les extrémités 31 sont destinées à être introduites dans des tubes, non représentés, de plus grand diamètre solidaires de la caisse 11 de la brouette 1.

Les moyens élastiques 55 de répulsion sont des lames métalliques soudées au fil 7 dans les fonds des cavités 50.

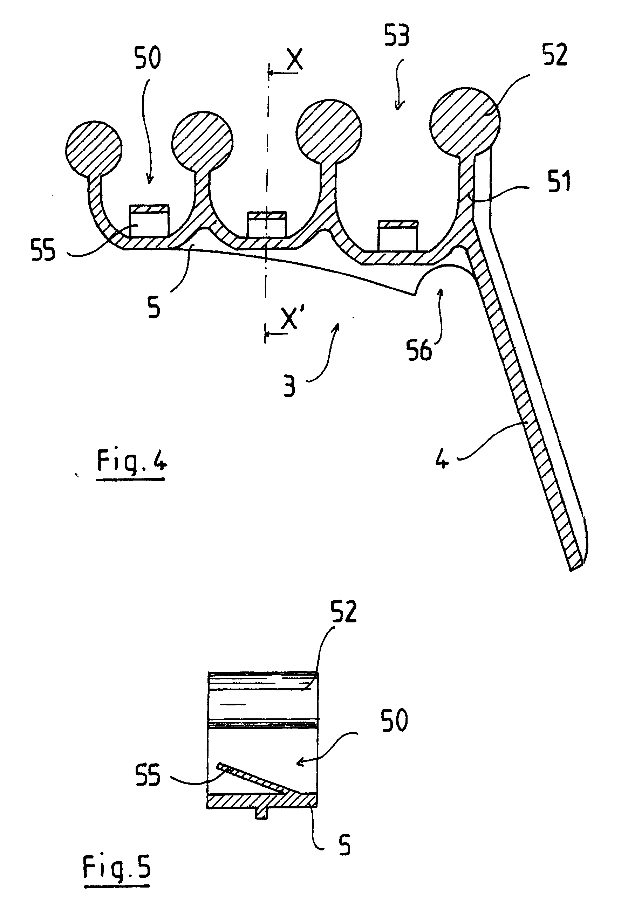

Si on se réfère maintenant aux figures 4 et 5, on peut voir que selon un troisième mode de réalisation, le support 3 est réalisé par moulage d'une matière plastique, les moyens élastiques 55 de répulsion venant de moulage, la solidarisation à la caisse 11 de la brouette 1 étant réalisée au moyen d'un aimant, non représenté.

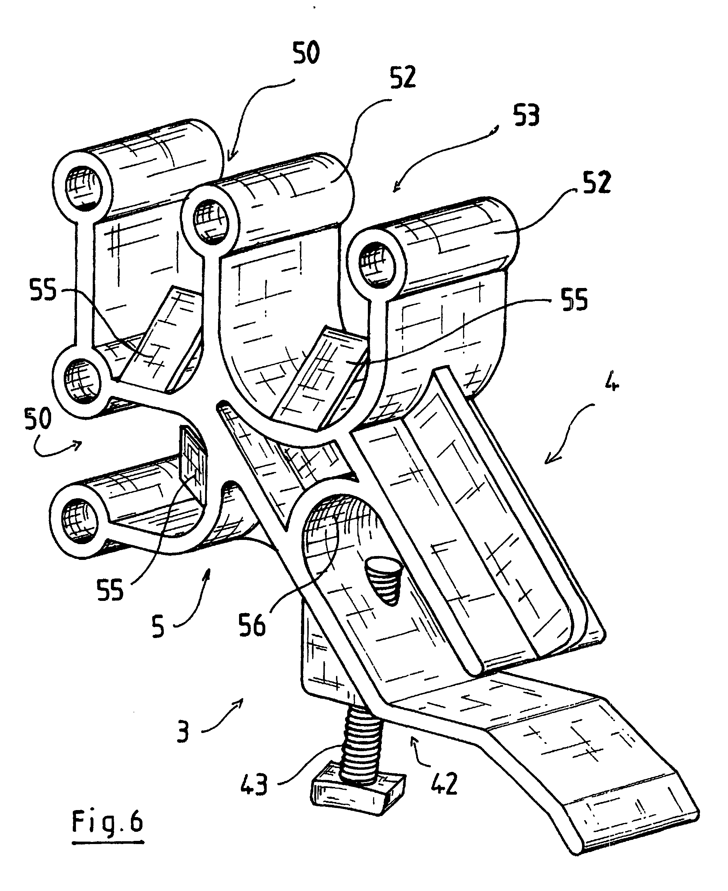

Si on se réfère maintenant à la figure 6, on peut voir que selon une variante, le support 3 étant toujours réalisé par moulage d'une matière plastique, les cavités 50 sont réparties différemment, à savoir deux s'ouvrant supérieurement et une s'ouvrant latéralement.

Cette variante permet notamment se limiter la largeur du support 3 et ainsi réduire son encombrement et son porte-à-faux.

On peut voir également que la partie inférieure 4 se présente sous la forme d'une pince 42 destinée à enserrer le côté 10 de la caisse 11 de la brouette 1, non représentée, tandis que le bord 12 peut venir en butée dans le creux 56 constituant le fond de la pince 42, où il est bloqué par une vis 43, vissée contre la partie inférieure du bord 12.

On notera que ce système de solidarisation du support 3 peut être réalisé quel que soit le mode de réalisation de ce dernier.

## Revendications

1. Dispositif de porte-outil destiné à être adapté sur une brouette, **caractérisé en ce qu'**il comprend au moins deux supports identiques (3), solidarisables sur le côté (10) de la caisse (11) d'une brouette (1), chacun desdits supports (3) comporte au moins une cavité rétentrice (50) en forme de U, de dimensions internes supérieures aux dimensions transversales du manche (6) de l'outil à maintenir, et dont l'ouverture (53) est d'une largeur inférieure au diamètre dudit manche (6), en sorte que l'introduction dudit manche (6) dans ladite cavité (50) est réalisée en force par déformation d'une partie (51) du support (3) au niveau de ladite ouverture (53), le fond (54) de ladite cavité (50) comportant un moyen élastique (55) de répulsion dudit manche (6) vers ladite ouverture (53).

2. Dispositif selon la revendication 1 **caractérisé en ce que** chaque support (3) comporte plusieurs cavités (50).

3. Dispositif selon la revendication 1 ou la revendication 2 **caractérisé en ce que** les supports (3) sont réalisés en matière plastique thermoformée.

4. Dispositif selon l'une quelconque des revendications de 1 à 3 **caractérisé en ce que** les supports (3) sont réalisés par pliage d'un fil métallique (7).

5. Dispositif selon l'une quelconque des revendications précédentes **caractérisé en ce que** le moyen élastique (55) de répulsion est une lame de métal solidarisée au support (3) dans le fond (54) de la cavité (50), disposée transversalement et de manière inclinée.

6. Dispositif selon l'une quelconque des revendications de 1 à 3 **caractérisé en ce que** les supports (3) sont réalisés par moulage d'une matière plastique.

7. Dispositif selon la revendication 6 **caractérisé en ce que** le moyen élastique (55) de répulsion est une partie plate inclinée venant de moulage du support (3).

8. Dispositif selon l'une quelconque des revendications précédentes **caractérisé en ce que** la solidarisation d'un support (3) sur le bord (12) de la caisse (11) de la brouette (1) est réalisée au moyen d'un élément magnétique (41).

9. Dispositif selon l'une quelconque des revendications de 1 à 7 **caractérisé en ce que** le support (3) comporte dans sa partie inférieure destinée à la solidarisation à la caisse (11) de la brouette (1), une partie (42) en forme de pince susceptible de venir serrer le côté (10) de ladite caisse (11), tandis que le bord (12) dudit côté (10) vient en butée dans le fond (56) de ladite partie (42), où il est bloqué par une vis (43) serrée contre la partie inférieure dudit bord (12).

## Patentansprüche

1. Werkzeughaltevorrichtung, vorgesehen um an einem Schubkarren angebracht zu werden, **gekennzeichnet dadurch, dass** sie mindestens zwei identische Haltevorrichtungen (3) enthält, die mit der Seite (10) des Gehäuses (11) eines Schubkarrens (1) solidarisch verbunden werden können, wobei jede der besagten Haltevorrichtungen (3) mindestens eine rückhaltende Einhölung (50) in U-Form enthält, mit einem Innenmaß das größer ist als die transversalen Masse des Griffs (6) des zu haltenden Werkzeugs, und deren Öffnung (53) eine geringere Breite aufweist, als der Durchmesser des besagten Griffs (6) auf die Weise, dass das Einsetzen des besagten Griffs (6) in die besagte Einhölung (50) mittels Kraftaufwand durch Verformen eines Teils (51) der Haltevorrichtung (3) auf Ebene der besagten Öffnung (53) erfolgt, wobei der Boden(54) der besagten Einhölung (50) ein elastisches Mittel (55) zum Rückstoßen des besagten Griffs (6) in Richtung der besagten Öffnung (53) enthält.

2. Vorrichtung nach Anspruch 1, **gekennzeichnet dadurch, dass** jede Haltevorrichtung (3) mehrere Einhölungen (50) enthält.

3. Vorrichtung nach Anspruch 1 oder Anspruch 2, **gekennzeichnet dadurch, dass** die Haltevorrichtung (3) aus wärmeverformtem Kunststoff hergestellt sind.

4. Vorrichtung nach einer der Ansprüche 1 bis 3, **gekennzeichnet dadurch dass** die Haltevorrichtungen (3) durch Biegen eines Metalldrahts (7) hergestellt sind.

5. Vorrichtung nach einem der oben stehenden Ansprüche, **gekennzeichnet dadurch, dass** das elastische Mittel (55) zum Zurückstoßen eine, mit der Haltevorrichtung (3) solidarisch verbundene Metallzunge im Boden (54) der Einhölung (50) ist, welche transversal und geneigt angebracht ist.

6. Vorrichtung nach einer der Ansprüche 1 bis 3, **gekennzeichnet dadurch dass** die Haltevorrichtungen (3) durch Formpressen von Kunststoffmaterial hergestellt sind.

7. Vorrichtung nach Anspruch 6, **gekennzeichnet dadurch, dass** das elastische Mittel (55) zum Zurückstoßen ein flacher, geneigter Teil ist, der vom Formen der Haltevorrichtung (3) kommt.

8. Vorrichtung nach einem der oben stehenden Ansprüche, **gekennzeichnet dadurch, dass** das solidarische Verbinden einer Haltevorrichtung (3) am Rand (12) des Gehäuses (11) eines Schubkarrens (1) mittels einem Magnetteil (41) erfolgt.

9. Vorrichtung nach einem der Ansprüche 1 bis 7, **gekennzeichnet dadurch, dass** die Haltevorrichtung (3) in ihrem unteren Teil, der für die solidarische Verbindung mit dem Gehäuse (11) des Schubkarrens (1) vorgesehen ist, einen Teil in Klammerform enthält, der dafür vorgesehen ist, die Seite (10) des besagten Gehäuses (11) zu klemmen, wobei die Kante (12) der besagten Seite (10) im Boden (56) des besagten Teils (42) anschlägt oder durch eine Schraube (43) blockiert wird, die gegen den unteren Teil der besagten Kante (12) angezogen wird (12).

## Claims

1. Device for a tool-box intended to be adapted for a wheelbarrow, **characterized by** the fact that it contains at least two identical supports (3), attachable to the side (10) of the box (11) of a wheelbarrow (1), each of the said supports (3) contains at least one holding cavity (50) in the shape of a U, whose internal dimensions are greater than those of the traverse dimensions of the handle (6) of the tool to be held, and whose opening (53) is of a width lower than the diameter of said handle (6) so that the introduction of said handle (6) in said cavity (50) is performed by force through the bending of a part (51) of the support (3) at the level of said opening (53), the bottom (54) of said cavity (50) includes an elastic device (55) of repulsion of said handle (6) towards said opening (53).

2. Device referred to in claim I **characterized by** the fact that each support (3) contains several cavities (50).

3. Device referred to in claim 1 or 2 **characterized by** the fact that the supports (3) are made in heat-molding plastic.

4. Device referred to in any one of the preceeding claims 1 to 3 **characterized by** the fact that the supports (3) made by the folding of a metallic wire (7).

5. Device referred to in any of the preceeding claims **characterized by** the fact that the elastic repulsion mean (55) is a metal blade attached to the support (3) at the bottom (54) of the cavity (50), located in a transverse manner and on an incline.

6. Device referred to in any one of the proceeding claims 1 to 3 **characterized by** the fact that the supports (3) are made by the molding of plastic.

7. Device referred to in claim 6 **characterized by** the fact that the elastic repulsion mean (55) is a flat part on an incline coming from the support molding (3).

8. Device referred to in any of the proceeding claims **characterized by** the fact that the attachment of a support (3) on the edge (12) of the box (11) of the wheelbarrow (1) is made by means of a magnetic element (41).

9. Device referred to in any of the preceeding claims 1 to 7 **characterized by** the fact that the support (3) includes in its lower part intended for attachment to the box (11) of the wheelbarrow (1), a part in the shape of plyers capable of tightening the side (10) of said box (11), whereas the edge (12) of said side (10) bumps up against the bottom (56) of said part (42), where it is fastened by a screw (43) tightened against the lower part of said edge (12).
